(19) Europäisches Patentamt
European Patent Office
Office européen des brevets

(11) **EP 1 438 604 B1**

(12) **FASCICULE DE BREVET EUROPEEN**

(45) Date de publication et mention
de la délivrance du brevet:
**18.02.2009 Bulletin 2009/08**

(21) Numéro de dépôt: **02770023.6**

(22) Date de dépôt: **11.07.2002**

(51) Int Cl.:
**G01S 7/02** (2006.01)   **G01S 13/95** (2006.01)

(86) Numéro de dépôt international:
**PCT/FR2002/002447**

(87) Numéro de publication internationale:
**WO 2003/007016 (23.01.2003 Gazette 2003/04)**

(54) **TECHNIQUE POUR L'ESTIMATION DE PLUIE AVEC RADAR LORSQUE L'ATTENUATION EST NEGLIGEABLE**

REGENSCHÄTZUNGSTECHNIK MITTELS EINES RADARS BEI VERNACHLÄSSIGBARER ABSCHWÄCHUNG

RADAR RAINFALL ESTIMATION TECHNIQUE WHEN ATTENUATION IS NEGLIGIBLE

(84) Etats contractants désignés:
**DE ES FI FR GB IT**

(30) Priorité: **11.07.2001 FR 0109206**

(43) Date de publication de la demande:
**21.07.2004 Bulletin 2004/30**

(73) Titulaire: **CENTRE NATIONAL DE LA RECHERCHE SCIENTIFIQUE (CNRS)
75016 Paris (FR)**

(72) Inventeurs:
• **TESTUD, Jacques
F-75017 Paris (FR)**
• **LE BOUAR, Erwan
F-75018 Paris (FR)**

(74) Mandataire: **Le Forestier, Eric
Cabinet Régimbeau
20, rue de Chazelles
75847 Paris cedex 17 (FR)**

(56) Documents cités:
WO-A-85/02266    WO-A-97/24629
WO-A-99/38028    US-A- 5 500 646

• DIRESKENELI H.; SELIGA T.A.; AYDIN K.: 'Prediction and comparisons of C-band reflectivity profiles from S-band dual polarization measurements' PROCEEDINGS OF IGARSS 1993 IEEE INTERNATIONAL GEOSCIENCE AND REMOTE SENSING SYMPOSIUM 18-21 AUG. 1993 1993, NEW YORK, NY, USA, pages 88 - 90
• VIVEKANANDAN J.; RAGHAVAN R.; BRINGI V.N.: 'Polarimetric radar modeling of mixtures of precipitation particles' IEEE TRANSACTIONS ON GEOSCIENCE AND REMOTE SENSING 1993, pages 109 - 119, XP000230285

**Description**

La présente invention est relative aux techniques météorologiques pour l'estimation d'un taux précipitant au moyen d'un radar.

L'estimation du taux de pluie à partir de mesures de radar est généralement confrontée au problème de l'atténuation de l'onde radar, et à celui de la variabilité naturelle de la pluie.

Le concept d'un radar cohérent à diversité de polarisation associé à un algorithme appelé ZPHI a été décrit dans WO 99/38 028, comme solution apportée à ces deux obstacles dans des conditions opérationnelles.

ZPHI est un algorithme profileur qui, à la base, utilise en entrée un profil de réflectivité mesurée $Z_a$ et une contrainte donnée par une différence de phase différentielle $\Phi_{DP}$ entre deux points $r_1$ et $r_2$ d'une ligne de visée.

A partir de ces mesures, on détermine l'atténuation spécifique A et un paramètre connu sous le nom de $N_o^*$, paramètre quantitatif de la distribution des tailles de gouttes.

Le taux de pluie R à estimer est obtenu comme une fonction de ces deux paramètres, pour les deux raisons suivantes :

- l'atténuation spécifique A n'est pas soumise aux effets d'atténuation. Son utilisation dans l'estimation de R permet ainsi de régler le problème de l'atténuation.
- le paramètre $N_o^*$ suffit pour décrire la variabilité naturelle de la pluie.

L'algorithme ZPHI s'applique aussi bien en bandes X et C, bandes de fréquence sensibles à l'atténuation.

On vise ici maintenant un procédé étendu à partir du procédé ZPHI, lorsque l'atténuation n'est pas importante.

Pour ce cas particulier, il est possible de prescrire un formalisme basé sur des éléments de base, mais plus adapté et beaucoup plus direct.

L'algorithme ZPHI peut également être appliqué à la bande S, pour laquelle l'atténuation n'est pas importante, voire négligeable. En effet, son intérêt subsiste dans la mesure où il reproduit « en direct » la variabilité naturelle de la pluie. Le recours au paramètre A n'est alors pas forcément nécessaire.

Le document WO97/24629 divulgue un procédé de détermination du taux de précipitation et du facteur de réflectivité d'un hydrométéore par radar à impulsions à longueur d'onde atténuée par ledit hydrométéore, ledit radar étant un radar à double polarisation fournissant une double sérié de mesures du facteur de réflectivité atténué ($Z_{H0}$ (r), $Z_{va}$ (r)) pour différentes portes en distance selon chacune des polarisations, ledit procédé comprenant les étapes qui consistent à A) déterminer dans chaque porte en distance du radar une première estimation d'un taux de précipitation ($R_s$) à partir du facteur de réflectivité mesuré pour une seule polarisation par une combinaison des relations liant le facteur de réflectivité au taux de précipitation et le coefficient d'atténuation sur une seule polarisation au taux de précipitation ; B) obtenir à partir de ladite première estimation du taux de précipitation une valeur estimée du facteur de réflectivité différentielle non atténué ($Z_{DRs}$) ; C) déduire de ladite valeur estimée du facteur de réflectivité différentielle non atténué ($Z_{DRs}$) et de la mesure radar du facteur de réflectivité différentielle atténué ($Z_{DRa}$) une valeur estimée de l'atténuation polarimétrique différentielle ($A_{DP}$); et D) chercher à obtenir l'égalité entre l'intégrale ($I_1$(r,R)) du taux de précipitation estimé dans l'étape A sur une seule polarisation du radar et l'intégrale ($I_2$(r,R)) du taux de précipitation déduite de ladite atténuation polarimétrique différentielle ($A_{DP}$), par ajustement itératif d'un des paramètres ($\alpha$, $\beta$) de la relation liant le facteur de réflectivité au taux de précipitation, de manière à pouvoir extraire les valeurs corrigées du facteur de réflectivité non atténué ($Z_{Hs}$(r)) et du taux de précipitation ($R_s$(r)).

Le document DIRESKENELI H, SELIGA T A, AYDIN K : "Prediction and comparisons of C-band reflectivity profiles from S-band dual polarization measurements" PROCEEDINGS OF IGARSS 1993 IEEE INTERNATIONAL GEOSCIENCE AND REMOTE SENSING SYMPOSIUM 18-21 AUG. 1993, 1993, pages 88-90, New York, NY, USA divulgue un' procédé d'estimation du champ de réflectivité atténuée à 5GHz en bande C, à partir du champ de réflectivité et de réflectivité différentielle à 3GHz en bande S non atténuée. Il établit pour cela des relations paramétriques à trois paramètres :

- d'une part entre l'atténuation $A_{H5}$ (en bande C), la réflectivité $Z_H$ (en bande S) et la réflectivité différentielle $Z_{DR}$ (en bande S) et
- d'autre part entre la réflectivité $Z_{H5}$ (en bande C), la réflectivité $Z_H$ (en bande S) et la réflectivité différentielle $Z_{DR}$ (en bande S).

Le document VIVEKANANDAN J, REGHAVAN R ; BRINGI V N : "Polarimetric radar modeling of mixtures of precipitations particles" IEEE TRANSACTIONS ON GEOSCIENCE AND REMOTE SENSING, 1993, pages 109-119, XP000230285 divulgue les résultats d'une étude générale de modélisation des paramètres polarimétriques dans le cas de mélanges de particules (par exemple pluie + grêle). L'approche est phénoménologique : on regarde comment les différents paramètres polarimétriques réagissent aux différentes espèces de particules et à leur mélange éventuel.

L'invention a pour but de proposer un procédé simple, fiable et efficace d'évaluation du taux précipitant dans le cas d'atténuation faible ou négligeable.

L'invention propose pour cela un procédé d'estimation d'un taux de précipitation tel que défini en revendication 1 annexée.

On propose également selon l'invention un dispositif pour l'estimation d'un taux précipitant tel que défini dans une revendication indépendante annexée.

D'autres caractéristiques, buts et avantages de l'invention apparaîtront à la lecture de la description détaillée qui va suivre.

Comme pour le procédé ZPHI, le procédé décrit maintenant requiert un radar à diversité de polarisation cohérent. Les données d'entrée sont le profil de réflectivité $Z_H$ (ou $Z_v$), ainsi que la mesure de la phase différentielle entre la voie H et la voie V.

On vise ici à déterminer le paramètre $N_0^*$ (ainsi que le taux de pluie) dans les cas où l'atténuation est négligeable, par exemple cas de la pluie mesurée par la bande S, cas de pluies suffisamment faibles pour les bandes C et X, ou encore cas de la glace.

Comme dans le procédé ZPHI, le présent procédé intègre deux types de données : la réflectivité $Z_H$ (ou $Z_v$, ou plus généralement $Z_e$) et la phase différentielle $\Phi_{DP}$.

Dans la mesure où l'atténuation est négligeable, la réflectivité mesurée peut être directement utilisée dans l'estimation du taux de pluie R, moyennant une estimation du paramètre $N_0^*$ qui est précisément l'objet du présent procédé.

Le procédé repose sur la relation « universelle » qui lie la réflectivité équivalente $Z_e$ ($mm^6 m^{-3}$) et le taux de phase différentielle $K_{DP}$ ($°km^{-1}$) :

$$\frac{K_{DP}}{N_0^*} = a\left[\frac{Z_e}{N_0^*}\right]^b \qquad (1)$$

Où a et b sont des coefficients spécifiés par le modèle de diffusion, qui dépendent du type de précipitations (pluie ou type de cristal de glace) et qui sont légèrement fonction de la température. La détermination du type de précipitations peut être opérée par une méthode de classification du type de celle décrite par Straka, Zrnié et Ryzhkov (2000).

Plus généralement, le modèle de diffusion définit la relation :

$$\frac{K_{DP}}{N_O^*} = F\left(\frac{Z_e}{N_0^*}\right) \qquad (2)$$

En intégrant (1) ou (2) entre les deux bornes $r_1$ et $r_2$ du segment d'intégation ($r_1 < r_2$), on obtient :

$$\Phi_{DP}(r_2) - \Phi_{DP}(r_1) = \left[N_0^*\right]^{1-b} \int_{r1}^{r2} Z_e^b \, ds \qquad (3)$$

Soit :

$$N_0^* = \left[\frac{\Phi_{DP}(r_2) - \Phi_{DP}(r_1)}{a \int_{r1}^{r2} Z_e^b \, ds}\right]^{\frac{1}{1-b}} \qquad (4)$$

Il ne reste plus alors qu'à transporter cette estimée de $N_0^*$ dans la relation « universelle » liant R à $Z_e$ :

$$R = c\left[N_0^*\right]^{1-d} Z_e^{\ d} \tag{5}$$

pour obtenir l'estimée de R.

Dans le cas général ou la relation $K_{DP}$-$Z_e$ s'écrit sous la forme (2), (3) devient :

$$\Phi_{DP}(r_2) - \Phi_{DP}(r_1) = N_0^* \int_{r_1}^{r_2} F\left(\frac{Z_e}{N_0^*}\right) ds \tag{6}$$

On n'a alors pas de solution analytique pour $N_0^*$, mais une solution numérique peut être trouvée par méthode numérique itérative en utilisant comme valeur de départ pour $N_0^*$ (« first guess ») la solution (4).

Dans le cas de la glace, qui n'atténue pratiquement pas l'onde radar quelle que soit la fréquence utilisée (bandes X, C et S), les limites d'application ne sont pas fixées.

Dans le cas de la pluie, l'application du procédé est contrainte par une atténuation négligeable entre les points $r_1$ et $r_2$ ($r_2 > r_1$). Plus spécifiquement, les conditions d'application qui conduisent à une erreur de 3 dB sur $N_0^*$ sont (pour T = 10°C, et une loi de distribution de tailles de gouttes de type gamma avec un paramètre de forme égal à 2) :

Pour la bande X : $[\Phi_{DP}(r_2) - \Phi_{DP}(r_1)] = \leq 4°$
Pour la bande C : $[\Phi_{DP}(r_2) - \Phi_{DP}(r_1)] \leq 10°$
Pour la bande S : $[\Phi_{DP}(r_2) - \Phi_{DP}(r_1)] = \leq 64°$

Les domaines d'application principaux de l'invention sont :

- les mêmes domaines d'application que dans le cas de l'algorithme ZPHI, à savoir l'estimation de la pluie sur les bassins versants pour la surveillance des crues et la gestion des ressources en eau. Cette application est valable pour tout type de pluie pour la bande S, ou aux pluies suffisamment faibles pour les bandes C et X.
- l'estimation des précipitations en phase glace.

L'invention présente également de nombreuses autres applications en météorologie.

[1] Differential propagation phase shift and rainfall rate estimation, Sachidananda M. et Zrnié D.S., Radio Science, 21-2, p.235-247 (1986).

[2] Polarimetric method for ice water content determination, Ryshkov A.V., Zrnié D.S. et B.A. Gordon, J. Appl. Meteor., p125-134 (1998).

[3] The rain profiling algorithm applied to polarimetric weather radar, Testud J.E. Le Bouar, E. Obligis et M. Ali-Mehenni, J. Atmos. Oceanic Technol., 17, p332-356 (2000).

[4] Bulk hydrometeor classification and quantification using polarimetric radar data : Synthesis of relations, Straka J.M., D.S. Zrnié, A.V. Ryzhkov, J. Appl. Meteor., 39, p1341-1372 (2000).

## Revendications

**1.** Procédé d'estimation d'un taux de précipitation dans le cas d'une pluie ne générant qu'une atténuation négligeable, au moyen d'un radar bipolaire, constitué par les étapes suivantes :

- on mesure, au moyen dudit radar bipolaire, sur un intervalle $[r_0, r_1]$ donné de rayon de trajet par rapport audit radar, la phase différentielle $\Phi_{DP}$ et la réflectivité apparente $Z_e$ selon au moins l'une des polarisations H ou V;
- on détermine une estimation de la valeur $N_0^*$ représentative de la distribution dimensionnelle des gouttes de pluie, à partir de la différence de la phase différentielle entre $r_0$ et $r_1$ et à partir d'une intégrale d'une fonction de la réflectivité apparente $Z_e$ le long de l'intervalle $[r_0, r_1]$ ;
- on déduit la valeur du taux de précipitation en un point à partir de $N_O^*$ et de la réflectivité apparente en ce point,

dans lequel
l'on calcule $N_0^*$ à partir de la relation :

$$\Phi_{DP}(r_2) - \Phi_{DP}(r_1) = N_0^* \int_{r_1}^{r_2} F\left(\frac{Z_e}{N_0^*}\right) ds$$

où $\Phi_{DP}$ est la phase différentielle et où F est une fonction vérifiant la relation :

$$\frac{K_{DP}}{N_0^*} = F\left(\frac{Z_e}{N_0^*}\right)$$

où $K_{DP}$ est le taux de variation de la phase différentielle le long du rayon.

**2.** Procédé selon la revendication 1, **caractérisé en ce qu'**on déduit $N_O^*$ directement à partir de la différence de phase différentielle entre $r_0$ et $r_1$ et à partir de l'intégrale de la réflectivité apparente $Z_e$ élevée à un exposant choisi.

**3.** Procédé selon la revendication 2, **caractérisé en ce que** l'exposant choisi est un exposant b, qui vérifie :

$$\frac{K_{DP}}{N_O^*} = a\left[\frac{Z_e}{N_0^*}\right]^b$$

ou $K_{DP}$ est le taux de variation de la phase différentielle le long du rayon, a et b étant spécifiés par le type de précipitation considéré et par la température.

**4.** Procédé selon la revendication 3, **caractérisé en ce que** le type de précipitation est un type correspondant parmi le type pluie et le type cristal de glace.

**5.** Procédé selon la revendication 1, **caractérisé en ce que** la fonction de la réflectivité apparente qui est intégrée est dépendante de $N_0$. et **en ce que** le procédé inclut le fait de calculer à plusieurs itérations cette fonction, avec une valeur $N_0^*$ déterminée à l'itération précédente.

**6.** Procédé selon la revendication 5, **caractérisé en ce que** l'on utilise, à une première itération, la valeur de $N_0^*$ donnée par :

$$N_O^* = \left[\frac{\Phi_{DP}(r_2) - \Phi_{DP}(r_1)}{a \int_{r_1}^{r_2} Z_e^b ds}\right]^{\frac{1}{1-b}}$$

**7.** Procédé selon l'une quelconque des revendications précédentes, **caractérisé en ce que** l'on détermine le taux de pluie R à partir de $N_0^*$ et de la réflectivité apparente $Z_e$ par la relation :

$$R = c\left[N_0^*\right]^{1-d} Z_e^d$$

8. Dispositif pour l'estimation d'un taux de précipitation comportant un radar bipolaire, ainsi que des moyens de traitement, ledit radar comportant des moyens pour la mesure de la phase différentielle et de la réflectivité selon au moins une des polarisations H ou V, **caractérisé en ce que** les moyens de traitement comprennent :

- des moyens pour determiner une estimation de la valeur $N_0{}^*$ représentative de la distribution dimensionnelle des gouttes de pluie, à partir de la différence de la phase différentielle entre $r_0$ et $r_1$ et à partir d'une intégrale d'une fonction de la réflectivité apparente $Z_e$ le long de l'intervalle $[r_0, r_1]$,
à partir de la relation :

$$\Phi_{DP}(r_2) - \Phi_{DP}(r_1) = N_0^{\cdot} \int_{r1}^{r2} F\left(\frac{Z_e}{N_0^{\cdot}}\right) ds$$

où $\Phi_{DP}$ est la phase différentielle et où F est une fonction vérifiant la relations :

$$\frac{K_{DP}}{N_0^{\cdot}} = F\left(\frac{Z_e}{N_0^{\cdot}}\right)$$

où $K_{DP}$ est le taux de variation de la phase différentielle le long du rayon, et
- des moyens pour déduire la valeur du taux de précipitation en un point à .partir de $N_o$ et de la réflectivité apparente en ce point.

## Claims

1. A method of using a bipolar radar to estimate a precipitation rate for rain that generates negligible attenuation, the method being constituted by the following steps:

• using said bipolar radar to measure the differential phase $\Phi_{DP}$ and the apparent reflectivity $Z_e$ on at least one of horizontal polarization H and vertical polarization V over a given interval $[r_0, r_1]$ of path radii relative to said radar;
• making an estimate of the value $No^*$ representative of the dimensional distribution of rain drops on the basis of the differential phase difference in the range $r_0$ to $r_1$ and on the basis of an integral of a function of the apparent reflectivity $Z_e$ along the interval $[r_0, r_1]$ ; and
• deducing a value for the precipitation rate at a point from $No^*$ and the apparent reflectivity at said point;

wherein $No^*$ is calculated from the following relationship:

$$\Phi_{DP}(r_2) - \Phi_{DP}(r_1) = N_0^{*} \int_{r1}^{r2} F\left(\frac{Z_e}{N_0^{*}}\right) ds$$

where $\Phi_{DP}$ is the differential phase and where F is a function satisfying the following relationship:

$$\frac{K_{DP}}{N_0^{*}} = F\left(\frac{Z_e}{N_0^{*}}\right)$$

where $K_{DP}$ is the rate of variation in differential phase along the radius.

2. A method according to claim 1, **characterized in that** $N_0{}^*$ is deduced directly from the differential phase difference between $r_0$ and $r_1$ and from the integral of the apparent reflectivity $Z_e$ raised to a selected exponent.

3. A method according to claim 2, **characterized in that** the selected exponent is an exponent b satisfying:

$$\frac{K_{DP}}{N_O{}^*} = a\left[\frac{Z_e}{N_0{}^*}\right]^b$$

where $K_{DP}$ is the rate of variation in the differential phase along the radius, $\underline{a}$ and $\underline{b}$ being specified by the type of precipitation under consideration and by temperature.

4. A method according to claim 3, **characterized in that** the type of precipitation is a corresponding type selected from rain type and ice crystal type.

5. A method according to claim 1, **characterized in that** the apparent reflectivity function which is integrated depends on $N_0{}^*$, and **in that** the method includes calculating this function in a plurality of iterations using a value for $N_0{}^*$ as determined at the preceding iteration.

6. A method according to claim 5, **characterized in that**, for the first iteration, the value used for $N_0{}^*$ is given by:

$$N_O{}^* = \left[\frac{\Phi_{DP}(r_2) - \Phi_{DP}(r_1)}{a\int_{r1}^{r2} Z_e{}^b ds}\right]^{\frac{1}{1-b}}$$

7. A method according to any preceding claim, **characterized in that** the rainfall rate R is determined from $N_0{}^*$ and from the apparent reflectivity $Z_e$ by the relationship:

$$R = c\left[N_0{}^*\right]^{1-d} Z_e{}^d$$

8. Apparatus for estimating a precipitation rate, the apparatus comprising a bipolar radar and processor means, said radar including means for measuring differential phase and reflectivity on at least one of horizontal polarization H and vertical polarization V, the apparatus being **characterized in that** the processor means comprise:

· means for making an estimate of the value $N_0{}^*$ representative of the dimensional distribution of rain drops on the basis of the differential phase difference in the range $r_0$ to $r_1$ and on the basis of an integral of a function of the apparent reflectivity $Z_e$ along the interval $[r_0, r_1$ from the following relationship:

$$\Phi_{DP}(r_2) - \Phi_{DP}(r_1) = N_0{}^* \int_{r1}^{r2} F\left(\frac{Z_e}{N_0{}^*}\right) ds$$

where $\Phi_{DP}$ is the differential phase and where F is a function satisfying the following relationship:

$$\frac{K_{DP}}{N_0{}^*} = F\left(\frac{Z_e}{N_0{}^*}\right)$$

where $K_{DP}$ is the rate of variation in differential phase along the radius; and
· means for deducing a value for the precipitation rate at a point from $N_0^*$ and the apparent reflectivity at said point.

**Patentansprüche**

1. Verfahren zur Schätzung einer Niederschlagsmenge, in diesem Fall von Regen, der keine vernachlässigbare Abschwächung mittels eines doppelt polarisierten Radars bewirkt, bestehend aus folgenden Schritten:

   - man misst mit Hilfe des so genannten doppelt polarisierten Radars während eines gegebenen Intervalls **[$r_0$, $r_1$]** der Strahlstrecke in Bezug auf den genannten Radar, die Phasendifferenz ΦDP und den sichtbaren Reflexionsgrad $Z_e$ nach zumindest einer der Polarisationen H oder V;
   - man bestimmt den Wert **$N_0^*$** mittels einer Schätzung, der für die dimensionale Verteilung der Regentropfen steht, basierend auf dem Unterschied der Phasendifferenz zwischen $r_0$ und $r_1$ und auf einer Integralfunktion des sichtbaren Reflexionsgrads $Z_e$, während des ganzen Intervalls [$r_0$ $r_1$];
   - man leitet den Wert der Niederschlagsmenge in einem Punkt, von **$N_o^*$** ausgehend, ab sowie von der sichtbaren Reflexion in diesem Punkt, in dem man **$N_o^*$** nach folgender Formel berechnet:

$$\Phi_{DP}(r_2) - \Phi_{DP}(r_1) = N_0^* \int_{r_1}^{r_2} F\left(\frac{Z_e}{N_0^*}\right) ds$$

.

   wobei $\phi_{DP}$ die Phasendifferenz ist und F eine Funktion ist, die die Beziehung darstellt:

$$\frac{K_{DP}}{N_0^*} = F\left(\frac{Z_e}{N_0^*}\right)$$

   bei der $K_{DP}$ der Variationsgrad der Phasendifferenz entlang des Strahls ist.

2. Verfahren gemäß Patentanspruch 1, **dadurch gekennzeichnet, dass $N_o^*$** direkt aus dem Unterschied der Phasendifferenz zwischen $r_0$ und $r_1$ und aus dem Integral der hohen sichtbaren Reflexion $Z_e$ mit einem gewählten Exponenten abgeleitet wird.

3. Verfahren gemäß Patentanspruch 2, **dadurch gekennzeichnet, dass** der gewählte Exponent ein Exponent b ist, der darlegt:

$$\frac{K_{DP}}{N_0^*} = a\left[\frac{Z_e}{N_0^*}\right]^b$$

   wobei $K_{DP}$ der Variationsgrad der Phasendifferenz entlang des Strahls ist, a und b durch die betrachtete Niederschlagsart und die Temperatur bestimmt werden.

4. Verfahren gemäß des Patentanspruchs 3, **dadurch gekennzeichnet, dass** die Niederschlagsart dem Regentyp und dem Eiskristalltyp entspricht.

5. Verfahren gemäß des Patentanspruchs 1, **dadurch gekennzeichnet, dass** die Funktion der sichtbaren Reflexion, die integriert ist und von **$N_0^*$** abhängt und **dadurch**, dass das Verfahren die Tatsache beinhaltet, die Berechnung dieser Funktion mehrmals mit dem Wert **$N_0^*$** zu wiederholen, der in der vorhergehenden Wiederholung ermittelt wurde.

**6.** Verfahren gemäß des Patentanspruchs 5, **dadurch gekennzeichnet, dass** man bei der ersten Wiederholung den Wert $N_0^*$ verwendet, der mit

$$N_0^* = \left[ \frac{\Phi_{DP}(r_2) - \Phi_{DP}(r_1)}{a \int_{r_1}^{r_2} Z_e^b \, ds} \right]^{\frac{1}{1-b}}$$

ermittelt wird.

**7.** Verfahren gemäß irgendeiner der vorhergehenden Patentansprüche, **dadurch gekennzeichnet, dass** der Niederschlagswert R mit $N_0^*$ und der sichtbaren Reflexion $Z_e$ durch die Beziehung

$$R = c \left[ N_0^* \right]^{1-d} Z_e^d$$

bestimmt wird.

**8.** Einrichtung zur Einschätzung der Niederschlagsmenge bestehend aus einem doppelt polarisierten Radar sowie den Verarbeitungseinrichtungen, dem besagten Radar, der aus Messeinrichtungen der Phasendifferenz besteht sowie der Reflexion nach zumindest einer der Polarisierungen H oder V, ist **dadurch gekennzeichnet, dass** die Verarbeitungseinrichtungen Folgendes beinhalten:

- Einrichtungen zur Ermittlung der Einschätzung des $N_0^*$ Wertes, der für die dimensionale Verteilung der Regentropfen steht, basierend auf der Differenz der Phasendifferenz zwischen $r_0$ und $r_1$ und auf einer Integralfunktion des sichtbaren Reflexionsgrads $Z_e$ während des ganzen Intervalls $[r_0 \, r_1]$,
basierend auf der Beziehung:

$$\Phi_{DP}(r_2) - \Phi_{DP}(r_1) = N_0^* \int_{r_1}^{r_2} F\left( \frac{Z_e}{N_0^*} \right) ds$$

bei der $\phi_{DP}$ die Phasendifferenz ist und bei der F eine die Funktion überprüfenden Beziehung ist:

$$\frac{K_{DP}}{N_0^*} = F\left( \frac{Z_e}{N_0^*} \right)$$

wobei $K_{DP}$ der Variationsgrad der Phasendifferenz entlang des Strahls ist, sowie
- Einrichtungen zur Ableitung der Niederschlagsmenge in einem Punkt ausgehend von $N_0^*$ und der sichtbaren Reflexion in diesem Punkt.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 9938028 A

- WO 9724629 A

**Littérature non-brevet citée dans la description**

- **DIRESKENELI H ; SELIGA T A ; AYDIN K.** Prediction and comparisons of C-band reflectivity profiles from S-band dual polarization measurements. *PROCEEDINGS OF IGARSS 1993 IEEE INTERNATIONAL GEOSCIENCE AND REMOTE SENSING SYMPOSIUM,* 18 Août 1993, 88-90
- **VIVEKANANDAN J ; REGHAVAN R ; BRINGI V N.** Polarimetric radar modeling of mixtures of precipitations particles. *IEEE TRANSACTIONS ON GEOSCIENCE AND REMOTE SENSING,* 1993, 109-119
- **SACHIDANANDA M. ; ZRNIÉ D.S.** Differential propagation phase shift and rainfall rate estimation. *Radio Science,* 1986, vol. 21-2, 235-247

- **RYSHKOV A.V. ; ZRNIÉ D.S. ; B.A. GORDON.** Polarimetric method for ice water content determination. *J. Appl. Meteor.,* 1998, 125-134
- **TESTUD J.E. LE BOUAR ; E. OBLIGIS ; M. ALI-MEHENNI.** The rain profiling algorithm applied to polarimetric weather radar. *J. Atmos. Oceanic Technol.,* 2000, vol. 17, 332-356
- **STRAKA J.M. ; D.S. ZRNIÉ ; A.V. RYZHKOV.** Bulk hydrometeor classification and quantification using polarimetric radar data : Synthesis of relations. *J. Appl. Meteor.,* 2000, vol. 39, 1341-1372